# FASCICULE DE BREVET EUROPEEN

(11) **EP 0 701 260 B1**
(45) Date de publication et mention de la délivrance du brevet: **07.01.1998**
(21) Numéro de dépôt: 95401960.0
(22) Date de dépôt: 25.08.1995
(51) Int. Cl.: G21C 13/036

(54) **Dispositif d'étanchéité pour une colonne d'instrumentation traversant le couvercle de la cuve d'un réacteur nucléaire à l'intérieur d'un adaptateur**
Dichtvorrichtung für ein innerhalb eines Adapters durch den Deckel eines Kernreaktorgefässes führendes Instrumentenführungsrohr
Sealing device for an instrumentation port column traversing the closure head of a nuclear reactor vessel within a vessel head adapter

(30) Priorité: 09.09.1994 FR 9410815
(43) Date de publication de la demande: 13.03.1996
(73) Titulaire: FRAMATOME, 92400 Courbevoie (FR); ATEA SOCIETE ATLANTIQUE DE TECHNIQUES AVANCEES, F-44470 Carquefou (FR)
(72) Inventeur: Malmasson, Jacques, F-91000 Evry (FR)
(74) Mandataire: Bouget, Lucien

(56) Documents cités:
- EP-A- 0 244 669
- EP-A- 0 288 745
- FR-A- 2 642 217
- FR-A- 2 676 524
- GB-A- 2 098 689
- US-A- 4 402 773

## Description

L'invention concerne un dispositif d'étanchéité pour une colonne d'instrumentation traversant le couvercle de la cuve d'un réacteur nucléaire à l'intérieur d'un adaptateur.

L'invention peut s'appliquer en particulier au passage étanche des colonnes de thermocouples à travers le couvercle de la cuve d'un réacteur nucléaire.

Dans les réacteurs nucléaires à eau sous pression, la cuve renfermant le coeur du réacteur comporte un couvercle de forme sensiblement hémisphérique présentant des ouvertures dans lesquelles sont fixés des adaptateurs permettant le passage des barres de commande du réacteur et des colonnes d'instrumentation telles que des colonnes de thermocouples de forme cylindrique ; dans chacune des colonnes de thermocouples, est disposé un ensemble de thermocouples permettant de mesurer la température du fluide de refroidissement à la sortie d'un ensemble d'assemblages du coeur du réacteur.

Chacun des adaptateurs comporte une partie saillante sous le couvercle assurant le guidage de la colonne de thermocouples et une partie saillante au-dessus du couvercle comportant des moyens de raccordement d'un ensemble tubulaire d'appui de la colonne de thermocouples qui peut être fixé dans le prolongement de l'adaptateur.

A l'intérieur de l'ensemble d'appui fixé à l'adaptateur sont disposés des moyens d'appui étanches destinés à coopérer avec une surface de la colonne de thermocouples, pour assurer le passage étanche de la colonne de thermocouples dans l'alésage de l'ensemble d'appui prolongeant l'adaptateur dans la direction axiale.

La colonne de thermocouples qui traverse l'alésage de l'ensemble d'appui et l'alésage de l'adaptateur situés dans le prolongement axial l'un de l'autre comporte une extrémité saillante par rapport à l'ensemble d'appui qui est en prise avec un dispositif de levage par traction permettant de déplacer la colonne de thermocouples dans la direction axiale. On peut ainsi mettre en contact, avec une certaine pression, la surface d'appui de la colonne de thermocouples et les moyens d'appui étanches de l'ensemble d'appui.

Les moyens d'appui étanches de la colonne de thermocouples à l'intérieur de l'ensemble d'appui sont généralement constitués par une surface d'appui de forme tronconique usinée dans l'alésage intérieur de l'ensemble d'appui dont la forme est complémentaire de la forme de la surface d'appui de la colonne de thermocouples et par un joint qui est comprimé entre les surfaces d'appui de la colonne de thermocouple et de l'ensemble d'appui lorsqu'on effectue le serrage en exerçant une traction sur l'extrémité supérieure de la colonne de thermocouples.

Après un certain temps d'utilisation du dispositif d'étanchéité de la colonne d'instrumentation dans le réacteur en service, il peut être nécessaire d'extraire la colonne de thermocouples de l'adaptateur ou d'extraire et de remplacer par un joint neuf, le joint d'étanchéité intercalé entre la surface d'appui de la colonne de thermocouples et l'ensemble d'appui, lorsque le joint d'étanchéité est devenu défectueux.

Pour faciliter la mise en oeuvre de ces opérations, on a proposé de réaliser l'ensemble d'appui en plusieurs parties.

Par exemple, dans le FR-A-2.642.217 et dans le EP-A-0 753 195, on a proposé et décrit un ensemble d'appui qui comporte un tronçon tubulaire solidaire de l'extrémité extérieure de l'adaptateur et une bride de forme annulaire constituant un couvercle rapporté sur le tronçon tubulaire ainsi que des moyens d'assemblage du tronçon tubulaire et du couvercle. Le joint ou l'ensemble de joints d'étanchéité de la colonne de thermocouples vient en appui contre la face intérieure du couvercle de l'ensemble d'appui fixé sur le tronçon tubulaire.

Le tronçon tubulaire peut être rapporté et fixé sur l'extrémité extérieure de l'adaptateur par l'intermédiaire d'une bride de liaison ou encore soudé sur la partie d'extrémité de l'adaptateur. Le tronçon tubulaire peut être également constitué par la partie supérieure de l'adaptateur usinée de manière à recevoir les moyens d'assemblage du couvercle de l'ensemble d'appui.

Les moyens d'assemblage peuvent être réalisés sous la forme de vis venant en prise avec des pièces de fixation engagées dans des cavités usinées dans le tronçon tubulaire et débouchant sur la surface latérale du tronçon. De cette manière, on peut réaliser le démontage de l'ensemble d'appui même en cas de grippage des vis d'assemblage.

Dans les dispositifs connus de l'art antérieur, on réalise l'étanchéité entre le tronçon tubulaire et le couvercle de l'ensemble d'appui, autour de leur alésage central dans lequel passe la colonne d'instrumentation, par l'intermédiaire d'un joint métallique intercalé et serré par les moyens d'assemblage entre le couvercle et le tronçon tubulaire.

Du fait de la très forte pression du fluide primaire du réacteur (155 bars), il est nécessaire d'exercer une pression extrêmement élevée sur le joint métallique par l'intermédiaire des moyens d'assemblage du couvercle et du tronçon tubulaire de l'ensemble d'appui.

Le joint d'étanchéité est susceptible de se déformer de manière excessive sous l'effet de la pression, pendant l'utilisation du réacteur nucléaire. Cette déformation peut se traduire par une perte d'étanchéité de la liaison entre les éléments de l'ensemble d'appui.

En outre, les moyens d'assemblage du couvercle et du tronçon tubulaire de l'ensemble d'appui qui comportent généralement trois vis réparties à 120° autour de l'axe de la colonne d'instrumentation et engagées chacune dans une pièce de fixation du tronçon tubulaire, ne permettent pas dans tous les cas de serrer le couvercle sur le tronçon tubulaire avec une pression suffisante.

Les dispositifs suivant l'art antérieur ne permettent donc pas d'assurer dans tous les cas une étanchéité parfaite autour de la colonne d'instrumentation.

Le but de l'invention est de proposer un dispositif d'étanchéité pour une colonne d'instrumentation traversant le couvercle d'une cuve de réacteur nucléaire à eau sous pression, à l'intérieur d'un adaptateur de forme tubulaire fixé dans une ouverture de traversée du couvercle et saillante à l'extérieur du couvercle de cuve, comportant un ensemble tubulaire d'appui fixé à l'extrémité de l'adapteur extérieure au couvercle et dans son prolongement axial et comprenant un tronçon tubulaire solidaire de l'extrémité extérieure de l'adaptateur, un couvercle de forme annulaire rapporté sur le tronçon tubulaire et des moyens d'assemblage du couvercle et du tronçon tubulaire et au moins un joint d'étanchéité annulaire disposé entre une portée d'appui de la colonne d'instrumentation et une partie interne du couvercle de l'ensemble tubulaire d'appui, ce dispositif d'étanchéité ayant une grande efficacité et permettant d'éviter tout risque de fuite entre le couvercle et l'élément tubulaire de l'ensemble d'appui.

Dans ce but, le tronçon tubulaire et le couvercle de l'ensemble d'appui comportent chacun une surface d'appui symétrique de révolution autour de l'axe de l'adaptateur, de manière que la surface d'appui du couvercle et la surface d'appui du tronçon tubulaire assurent entre elles par contact direct métal sur métal une étanchéité à l'eau sous pression du réacteur, lorsqu'elles sont fixées l'une sur l'autre par les moyens d'assemblage.

De préférence, les moyens d'assemblage du couvercle sur le tronçon tubulaire sont constitués par au moins trois vis de serrage et par exemple six vis et deux pièces de fixation en forme de demi-anneaux engagées dans une gorge débouchant sur la surface latérale externe du tronçon tubulaire dans chacune desquelles sont prévues trois ouvertures taraudées pour assurer le serrage du couvercle sur le tronçon tubulaire.

Egalement de manière préférentielle, le joint d'étanchéité annulaire disposé entre la portée d'appui de la colonne d'instrumentation et la partie interne du couvercle de l'ensemble tubulaire d'appui est constitué par un joint métallique déformable annulaire de forme tronconique venant en appui par sa petite base sur la colonne de thermocouple et par l'intermédiaire de sa grande base sur la surface interne du couvercle de l'ensemble d'appui.

Afin de bien faire comprendre l'invention, on va maintenant décrire, à titre d'exemple non limitatif, en se référant aux figures jointes en annexe, un mode de réalisation d'un dispositif d'étanchéité suivant l'invention permettant d'assurer l'étanchéité d'une colonne de thermocouples traversant le couvercle de la cuve d'un réacteur nucléaire à l'intérieur d'un adaptateur.

La figure 1 est une vue en coupe par un plan vertical d'une traversée du couvercle de la cuve d'un réacteur nucléaire assurant le passage d'une colonne de thermocouples et équipée d'un dispositif d'étanchéité suivant l'invention.

La figure 2 est une vue en perspective éclatée des éléments constituant le dispositif d'étanchéité.

Les figures 3A et 3B sont des vues en coupe par un plan axial du dispositif d'étanchéité.

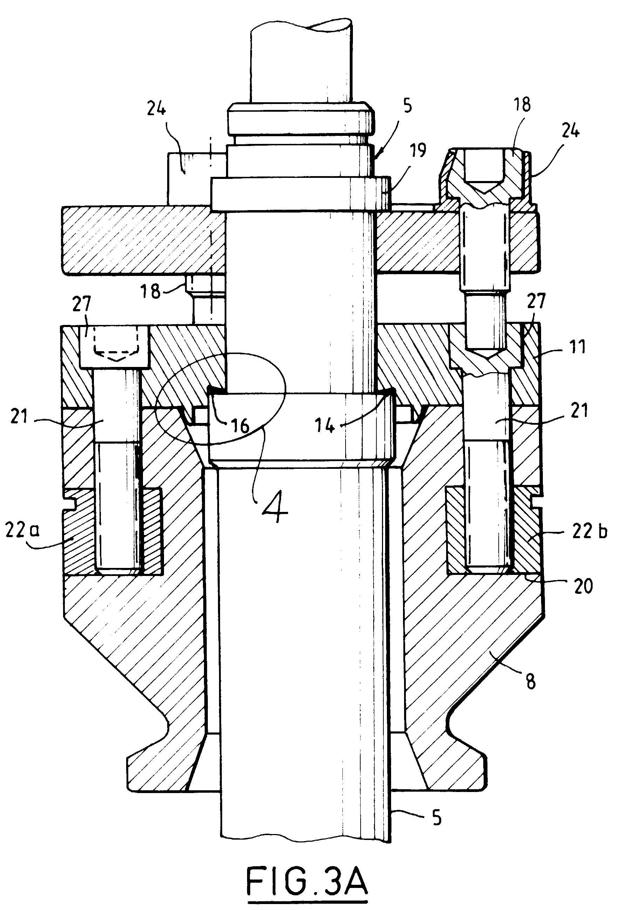

La figure 3A représente le dispositif d'étanchéité en position serrée et étanche.

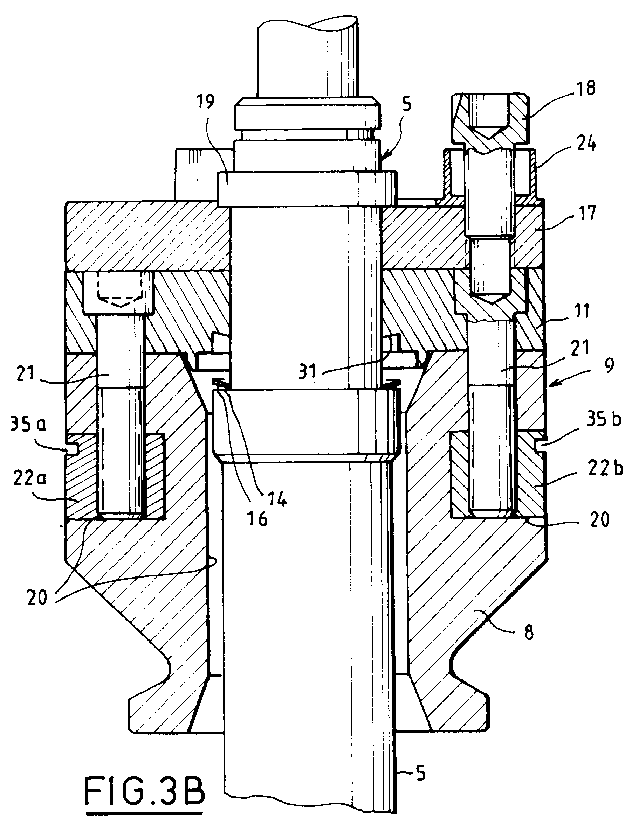

La figure 3B représente le dispositif en position desserrée.

La figure 4 est une vue agrandie du détail 4 de la figure 3A.

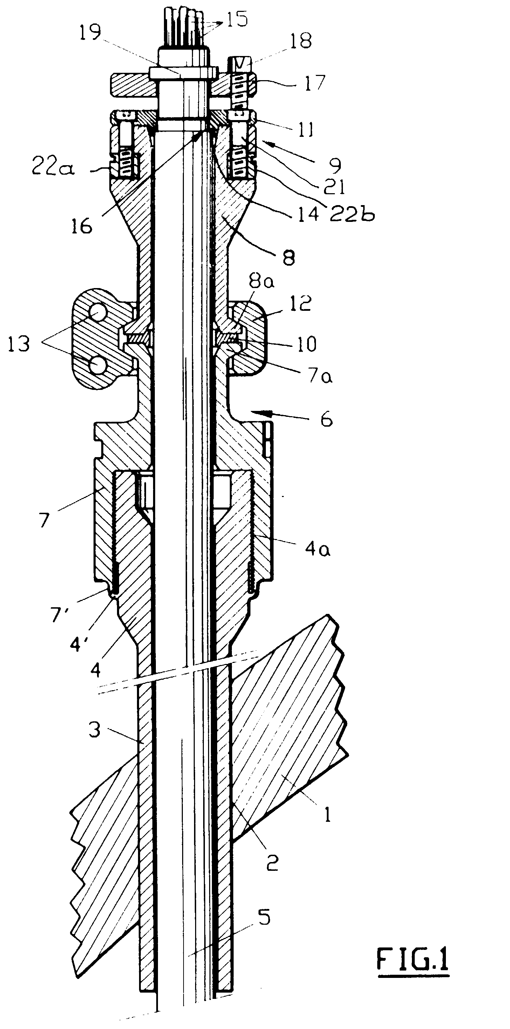

Sur la figure 1, on voit une partie du couvercle de cuve 1 d'un réacteur nucléaire à eau sous pression traversée par une ouverture 2 dans laquelle est fixé de manière étanche, par sertissage et soudage, un adaptateur 3 comportant une partie saillante en-dessous du couvercle de la cuve assurant le guidage d'une colonne de thermocouples 5 et une partie saillante au-dessus du couvercle de la cuve 1 constituant un épanouissement 4 sur la surface extérieure duquel est usiné un filetage 4a.

Sur la partie supérieure 4 de l'adaptateur 3 est fixé, dans le prolongement axial de l'adaptateur 3, un ensemble de fixation et d'étanchéité 6 de la colonne de thermocouples 5, par l'intermédiaire d'une partie inférieure 7 comportant un alésage taraudé qui est engagé sur la partie filetée 4a de l'épanouissement 4 de l'adaptateur 3. On assure ainsi l'assemblage de l'ensemble de fixation et d'étanchéité 6 de la colonne de thermocouples 5 à l'extrémité de l'adaptateur 3. L'épanouissement 4 de l'adaptateur 3 et la partie inférieure 7 de l'ensemble de fixation et d'étanchéité 6 comportent des joints circulaires 4' et 7' qui viennent en coïncidence lorsque le prolongateur 7 est entièrement vissé sur l'épanouissement 4. Les joints 4' et 7' sont reliés par soudure de manière à assurer l'étanchéité de la liaison vissée entre les pièces 4 et 7.

Le couvercle et les adaptateurs de traversée 3 sont réalisés en usine et transportés sur le site où l'on réalise la mise en place du réacteur nucléaire.

Les dispositifs de fixation et d'étanchéité 6 des colonnes de thermocouples 5 sont rapportés et fixés sur les extrémités supérieures des adaptateurs sur le site du réacteur.

La partie inférieure de l'ensemble de fixation et d'étanchéité 6 est fixée sur l'extrémité de l'adaptateur de manière à pouvoir être démontée en cas de besoin par fusion de la zone de jonction des joints 4' et 7'. Ce démontage n'est effectué que pour des réparations ou des interventions exceptionnelles sur la traversée de la colonne de thermocouples.

L'ensemble de fixation et d'étanchéité 6 comporte une partie supérieure 8 qui est assemblée de manière étanche au prolongateur 7 avec interposition d'un joint métallique 10 de forme spéciale, les parties 7 et 8 de l'ensemble de fixation et d'étanchéité étant assemblées grâce à une bride de serrage 12 en deux parties qui peuvent être reliées entre elles et serrées grâce à des vis introduites dans les ouvertures 13 traversant des oreilles en vis-à-vis situées à l'extrémité des deux parties en forme de secteurs.

La bride de serrage comporte, à sa partie interne, des portées tronconiques venant en contact de serrage avec des portées tronconiques correspondantes usinées sur des épanouissements d'extrémité 7a et 8a du prolongateur et de la partie supérieure 8 respectivement de l'ensemble de fixation et d'étanchéité 6.

L'adaptateur 3 et l'ensemble de fixation et d'étanchéité 6 sont constitués sous forme tubulaire et disposés dans le prolongement axial l'un de l'autre de manière à ménager un passage pour la colonne de thermocouples 5 constituée par un tube de support et par un ensemble de thermocouples 15.

La partie supérieure 8 de l'ensemble de fixation de la colonne de thermocouples constitue un tronçon de forme tubulaire de l'ensemble d'appui 9 du dispositif d'étanchéité. L'ensemble d'appui 9 de la colonne de thermocouples comporte en plus du tronçon tubulaire 8, une bride 11 constituant un couvercle de forme annulaire rapporté sur le tronçon tubulaire et fixé par des vis 21, de la manière qui sera décrite plus loin.

Dans le cas d'un ensemble d'appui tel que l'ensemble 9 réalisé en deux parties fixées l'une sur l'autre par des vis, il est possible de fixer le tronçon tubulaire 8 sur le prolongateur 7 ou sur la partie supérieure de l'adaptateur 4 par soudure ou encore de réaliser le tronçon tubulaire 8 en une seule pièce avec la partie supérieure 4 de l'adaptateur 3 qui est usiné pour recevoir les moyens d'assemblage du couvercle 11.

En effet, la liaison démontable entre le tronçon tubulaire 8 et l'adaptateur par l'intermédiaire de la bride de serrage 12 n'est plus alors indispensable pour effectuer le démontage de la colonne de thermocouples 5 et de son joint d'étanchéité. Ce démontage peut être effectué en séparant le couvercle 11 du tronçon tubulaire 8 de l'ensemble d'appui 9.

Le tronçon tubulaire 8 et le couvercle 11 de l'ensemble d'appui 9 comportent des alésages qui sont disposés dans le prolongement axial l'un de l'autre et dans le prolongement axial de l'alésage de l'adaptateur 3.

La colonne de thermocouples 5 comporte une partie supérieure dont le diamètre est inférieur au diamètre de la partie courante séparée de cette partie courante par un épaulement de forme sensiblement tronconique constituant la portée d'appui 14 de la colonne de thermocouples sur le joint d'étanchéité 16 en appui sur la surface inférieure interne du couvercle 11.

Le déplacement de la colonne de thermocouples 5 pour effectuer le serrage de la portée 14 contre le joint d'étanchéité 16 est assuré par un plateau de compression 17 traversé par des ouvertures taraudées et muni de vis de compression 18 engagées dans les ouvertures taraudées et venant reposer, par leur extrémité inférieure, sur les têtes de vis 21 de fixation du couvercle 11.

Le plateau 17 comporte une ouverture centrale permettant son engagement sur la partie d'extrémité de la colonne d'instrumentation 5.

Une bague de traction 19 dont le diamètre extérieur est supérieur au diamètre de l'ouverture centrale du plateau 17, qui est constituée de deux demi-anneaux engagés dans une gorge ménagée à la partie périphérique de la colonne de thermocouples dans sa partie supérieure permet de transmettre l'effort de traction exercé par le plateau 17 à la colonne de thermocouples 5.

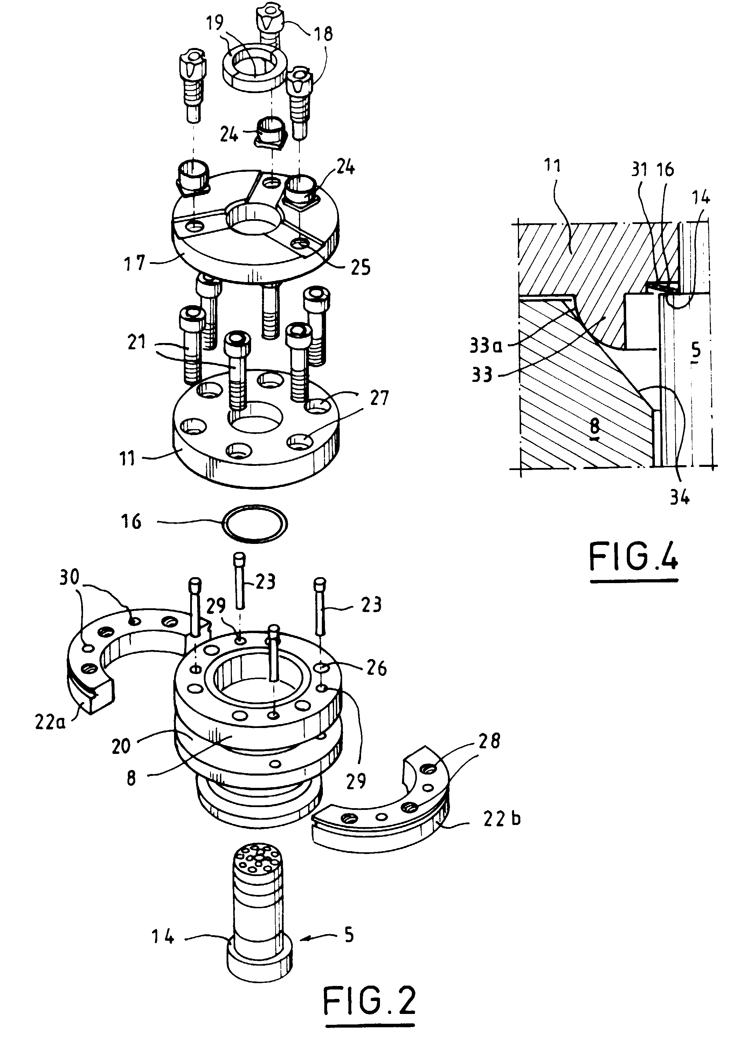

On va maintenant se reporter à l'ensemble des figures 2, 3A, 3B et 4 pour décrire le dispositif d'étanchéité suivant l'invention comportant en particulier l'ensemble d'appui 9, les moyens d'appui étanches 16 de la colonne de thermocouples 5 et le plateau de compression 17.

Sur la figure 2, on a représenté les différents éléments constituant le dispositif d'étanchéité avant leur assemblage, dans une vue en perspective éclatée.

L'élément tubulaire 8 et le couvercle 11 sont réalisés de manière à pouvoir être assemblés entre eux pour constituer l'élément d'appui 9. L'élément tubulaire 8 comporte une gorge périphérique 20 débouchant sur sa surface latérale dans laquelle peuvent être engagés latéralement deux demi-anneaux 22a et 22b constituant des pièces de fixation des moyens d'assemblage vissés du couvercle 11 sur l'élément tubulaire 8.

La partie supérieure de l'élément tubulaire 8, au-dessus de la gorge 11 constitue une bride qui est traversée par six trous 26 de direction axiale disposés à 60° l'un de l'autre autour de l'axe de l'élément tubulaire 8.

Le couvercle 11 est lui-même traversé par six trous 27 disposés à 60° l'un de l'autre autour de l'axe du couvercle 11, de manière que les trous 26 et 27 puissent venir dans des positions superposées lors de la mise en place du couvercle 11 sur l'élément tubulaire 8. Chacun des demi-anneaux 22a et 22b comportent trois trous taraudés 28 disposés de manière que, lorsque les demi-anneaux 22a et 22b sont engagés à l'intérieur de la gorge 20, les trous 28 sont disposés à 60° l'un de l'autre autour de l'axe de l'élément tubulaire 8 et peuvent être placés dans le prolongement des trous 26.

La partie supérieure de l'élément tubulaire 8 est de plus traversée par quatre trous 29 disposés chacun entre deux trous 26 successifs et les demi-anneaux 22a et 22b comportent chacun deux trous 30 disposés entre deux trous 28 successifs susceptibles de venir dans le prolongement des trous 29 lors de l'engagement des demi-anneaux 22a et 22b dans la gorge 20 dans une orientation bien déterminée.

Des axes de positionnement 23 peuvent être engagés dans les trous 29 et 30 dans l'alignement les uns des autres pour assurer le maintien des demi-anneaux 22a et 22b dans une orientation permettant la fixation du couvercle 11 sur l'élément tubulaire 8 par l'intermédiaire de six vis 21. Lorsque les demi-anneaux 22a et 22b sont placés dans une orientation permettant l'engagement des axes de positionnement 23 dans les ouvertures 29 et 30 dans le prolongement les unes des autres, les six trous taraudés 28 se trouvent dans le prolongement des six trous 26 traversant la partie supérieure de l'élément tubulaire 8 au-dessus de la gorge 20.

Il suffit alors, pour la mise en place du couvercle 11, de superposer les six trous 27 aux six trous 26 de l'élément tubulaire 8 pour permettre l'engagement des vis 21 dans les trous 27 et 26 en coïncidence et réaliser leur vissage dans les trous taraudés 28 des demi-anneaux 22a et 22b. On réalise ainsi l'assemblage des deux parties de l'ensemble d'appui 9.

Il est possible d'utiliser moins de six vis 21 pour réaliser l'assemblage du couvercle 11 et de l'élément tubulaire 8. Toutefois, il est nécessaire d'utiliser au moins trois vis. Dans le cas où l'assemblage est réalisé en utilisant seulement trois vis, on peut prévoir cependant six trous 26, 27 sur les pièces 11 et 8, et six trous taraudés sur les demi-anneaux 22a, 22b. On engage les vis 21 dans un ensemble sur deux de trous alignés. En cas de détérioration d'un trou taraudé, on peut utiliser un ensemble de trous voisins en remplacement.

Les vis 21 comportent une tête venant en appui dans une partie supérieure élargie diamétralement des trous 27, pour assurer le serrage du couvercle 11 sur l'élément tubulaire 8, comme il est visible en particulier sur les figures 3A et 3B.

Lors du montage du couvercle 11, l'ouverture centrale du couvercle 11 vient s'engager sur la partie supérieure de la colonne de thermocouples 5 présentant un diamètre réduit.

L'anneau d'appui 19 en deux parties et le plateau 17 ne sont pas encore engagés sur la partie supérieure de la colonne de thermocouples de sorte que le plateau 11 peut être engagé sur la partie supérieure de la colonne 5.

Comme il est visible en particulier sur la figure 3B, le plateau 11 comporte sur sa surface inférieure ou surface interne, une gorge ayant pour axe l'axe de l'ouverture centrale de passage de la colonne de thermocouples 5 dont le fond 31 constitue une portée d'appui pour le bord externe du joint 16 de la colonne de thermocouples 5 dont le bord interne vient en appui sur la portée 14 de la colonne de thermocouples 5, comme il est visible en particulier sur la figure 4.

Sur la figure 4, on voit que le plateau 11 comporte autour de l'ouverture centrale de passage de la colonne de thermocouples 5 et autour de la gorge 31, dans une disposition coaxiale par rapport à l'ouverture centrale de passage de la colonne de thermocouples, une partie annulaire 33 en saillie par rapport à la face inférieure du couvercle 11. La partie annulaire en saillie 33 du couvercle 11 présente une surface extérieure 33a ayant la forme d'un secteur sphérique ou torique.

Le tronçon tubulaire 8 sur lequel est rapportée le couvercle 11 comporte à l'extrémité supérieure de son alésage interne assurant le passage de la colonne de thermocouples 5, une surface tronconique 34 ayant pour axe l'axe de l'alésage de passage de la colonne de thermocouples 5 aligné, dans la position de montage du couvercle 11, avec l'ouverture centrale de passage de la colonne de thermocouples 5 à travers le couvercle 11.

Lors du montage du couvercle 11 sur l'élément tubulaire 8, la surface 33a en forme de secteur sphérique du couvercle 11 vient en appui sur la surface tronconique 34a de l'élément tubulaire 8.

Lors du serrage des vis d'assemblage 21 du couvercle 11 et de l'élément tubulaire 8, il se produit un léger glissement de la surface d'appui 33a du couvercle 11 sur la surface d'appui correspondante 34 de l'élément tubulaire 8.

On réalise le serrage du couvercle 11 sur l'élément tubulaire 8 par vissage au couple des six vis 21 qui réalisent un serrage uniforme du couvercle 11 sur l'élément tubulaire 8, par l'intermédiaire de leurs surfaces d'appui 33a et 34. La forme sphérique de la surface d'appui 33a permet de réaliser dans tous les cas un excellent contact entre les surfaces 33a et 34. On réalise ainsi une étanchéité entre les éléments 8 et 11 de l'ensemble d'appui, autour de la colonne de thermocouples 5, par contact direct métal sur métal de l'élément en saillie 33 du couvercle 11 et de la portée tronconique 34 de l'élément tubulaire 8.

En outre, dans la position de serrage du joint 16 de la colonne de thermocouples, comme représenté sur la figure 4, l'étanchéité est assurée entre la colonne de thermocouples 5 et le couvercle 11.

Le joint 16 est un joint métallique constitué sous la forme d'une paroi annulaire flexible de forme sensiblement tronconique reposant par sa petite base sur la portée d'appui 14 de la colonne de thermocouples 5 et par l'intermédiaire de son bord extérieur constituant sa grande base sur le fond de la gorge 31 du couvercle 11.

Comme il est visible sur les figures 3A et 3B, les demi-anneaux 22a et 22b constituant des écrous dans lesquels sont fixées les vis 21 comportent une gorge 35a ou 35b débouchant sur leurs surfaces externes qui constitue une cavité d'engagement d'un moyen de coupe pour réaliser le découpage des demi-anneaux 22a et 22b et des extrémités des vis 21 dans le cas d'un grippage des vis 21.

On peut ainsi réaliser dans tous les cas le démontage de l'ensemble d'appui 9, par exemple pour avoir accès au joint d'étanchéité 16 ou pour extraire la colonne de thermocouples 5 de l'adaptateur.

Comme il est visible sur la figure 3B, après assemblage et serrage étanche du couvercle 11 sur le tronçon tubulaire 8, pour constituer l'ensemble d'appui 8, on engage le plateau de compression 17 sur la partie supérieure de la colonne de thermocouples 5.

Le plateau de compression 17 comporte trois vis de compression 18 qui sont engagées dans trois ouvertures taraudées traversant le plateau 17 et disposées à 120° l'une de l'autre autour de l'axe du plateau 17 dans le fond d'un lamage 25 usiné sur la surface supérieure du plateau 17. Chacune des vis 18 est engagée dans une coupelle 24 comportant une base de forme carrée qui est engagée dans le lamage 25, de manière que la coupelle soit bloquée en rotation et une virole déformable.

Chacune des vis 18 vient s'engager par sa partie inférieure, en-dessous du plateau de compression 17, dans l'ouverture profilée d'une tête de vis 21 utilisée pour le serrage de la vis 21.

L'anneau de levage 19 en deux parties est mis en place à l'intérieur de la gorge de la colonne de thermocouple 5, au-dessus de la surface supérieure du plateau 17.

Par mise en rotation des vis 18 du plateau de levage 17, dans le sens voulu, cette rotation pouvant être effectuée en synchronisme sur les trois vis en utilisant un outil adapté, on réalise le levage du plateau 17 et par l'intermédiaire de l'anneau de levage 19 en deux parties, de la colonne de thermocouples 5 dont la portée d'appui 14 sur laquelle repose le joint d'étanchéité 16 se déplace en direction du fond de la gorge 31.

A la fin du déplacement dans la direction verticale et vers le haut de la colonne de thermocouples 5, on réalise le serrage du joint 16 entre la portée d'appui 14 et le fond de la gorge 31 du couvercle 11, comme représenté sur la figure 3A.

Le dispositif d'étanchéité suivant l'invention permet donc de réaliser une très bonne étanchéité entre les deux composants de l'élément d'appui 9, par coopération de deux surfaces d'appui métalliques usinées sur la surface inférieure du couvercle et sur la surface interne du tronçon tubulaire respectivement. On obtient un serrage très efficace du fait de l'utilisation de six vis réparties suivant la périphérie du couvercle 11 et qui sont vissées pour trois d'entre elles dans un premier demi-anneau et pour les trois autres dans un second demi-anneau engagés l'un et l'autre en position juxtaposée, dans une gorge usinée à la périphérie du tronçon tubulaire.

Comme indiqué plus haut, il est cependant possible de réaliser le serrage avec un nombre de vis inférieur à six et au moins égal à trois.

L'invention ne se limite pas au mode de réalisation qui a été décrit.

C'est ainsi qu'on peut imaginer d'utiliser des surfaces d'appui du couvercle 11 et du tronçon tubulaire 8 pour réaliser l'étanchéité métal sur métal entre ces deux pièces, d'une forme différente de la forme sphérique ou torique et de la forme tronconique qui ont été décrites.

Ces surfaces d'appui doivent présenter dans tous les cas la forme d'une surface de révolution autour de l'axe de passage de la colonne de thermocouples et permettre un léger glissement et une orientation des deux pièces de l'élément d'appui l'une par rapport à l'autre pendant le serrage.

Le dispositif d'étanchéité suivant l'invention- peut s'appliquer non seulement aux colonnes de thermocouples mais encore à toute colonne d'instrumentation traversant le couvercle de la cuve d'un réacteur nucléaire à l'intérieur d'un adaptateur.

## Revendications

1. Dispositif d'étanchéité pour une colonne d'instrumentation (5) traversant le couvercle (1) d'une cuve de réacteur nucléaire à eau sous pression, à l'intérieur d'un adaptateur (3) de forme tubulaire fixé dans une ouverture de traversée du couvercle (1) et saillant à l'extérieur du couvercle de cuve (1), comportant un ensemble tubulaire d'appui (9) fixé à l'extrémité de l'adaptateur (3) extérieure au couvercle (1) et dans son prolongement axial et comprenant un tronçon tubulaire (8) solidaire de l'extrémité extérieure de l'adaptateur (3), un couvercle (11) de forme annulaire rapporté sur le tronçon tubulaire (8) et des moyens d'assemblage (21, 22a, 22b) du couvercle (11) et du tronçon tubulaire (8) et au moins un joint d'étanchéité annulaire (16) disposé entre une portée d'appui (14) de la colonne d'instrumentation et une partie interne (31) du couvercle (11) de l'ensemble tubulaire d'appui (9), caractérisé par le fait que le tronçon tubulaire (8) et le couvercle (11) de l'ensemble d'appui (9) comportent chacun une surface d'appui (33a, 34) symétrique de révolution autour de l'axe de la colonne de thermocouples (5), de manière que la surface d'appui (33a) du couvercle (11) et la surface d'appui (34) du tronçon tubulaire assurent entre elles par contact direct métal sur métal une étanchéité à l'eau sous pression du réacteur, lorsqu'elles sont fixées l'une sur l'autre par les moyens d'assemblage (21, 22a, 22b).

2. Dispositif suivant la revendication 1, caractérisé par le fait que la surface d'appui (33a) du couvercle (11) présente la forme d'un secteur sphérique et la surface d'appui du tronçon tubulaire (8), une forme tronconique.

3. Dispositif suivant la revendication 2, caractérisé par le fait que la surface d'appui sphérique (33a) du couvercle (11) est usinée sur une partie (33) du couvercle (11) en saillie par rapport à la face du couvercle (11) dirigée vers le tronçon tubulaire (8).

4. Dispositif suivant l'une quelconque des revendications 2 et 3, caractérisé par le fait que la surface d'appui tronconique (34) de l'élément tubulaire (8) constitue une partie d'un alésage intérieur du tronçon tubulaire (8) située à l'extrémité du tronçon tubulaire sur laquelle est rapporté et fixé le couvercle (11).

5. Dispositif suivant l'une quelconque des revendications 1 à 4, caractérisé par le fait que les moyens d'assemblage du couvercle (11) et du tronçon tubulaire (8) comportent au moins trois vis de serrage (21) et par exemple, six vis de serrage (21) disposées à 60° l'une de l'autre autour de l'axe de la colonne de thermocouples (5).

6. Dispositif d'étanchéité suivant la revendication 5, caractérisé par le fait que les moyens d'assemblage du couvercle (11) et du tronçon tubulaire (8) comportent deux demi-anneaux (22a, 22b) engagés en position juxtaposée à l'intérieur d'une gorge (20) ayant pour axe l'axe du tronçon tubulaire (8) usinée dans la surface latérale du tronçon tubulaire, chacun des demi-anneaux (22a) comportant trois trous taraudés (28) pour l'engagement de trois vis de serrage (21).

7. Dispositif d'étanchéité suivant l'une quelconque des revendications 1 à 6, caractérisé par le fait que le joint d'étanchéité annulaire (16) disposé entre la portée d'appui (14) de la colonne d'instrumentation (5) et la partie interne (31) du couvercle (11) est un joint constitué par une paroi métallique annulaire déformable de forme sensiblement tronconique venant en contact par sa petite base avec la portée d'appui de la colonne de thermocouples (5) et par l'intermédiaire de sa grande base avec la partie interne (31) du couvercle (11).

## Patentansprüche

1. Dichtvorrichtung für ein Instrumentenführungsrohr (5), das durch den Deckel (1) eines Druckwasserkernreaktorbehälters hindurch innerhalb eines rohrförmigen Adapters (3) verläuft, der in einer Durchgangsöffnung des Deckels (11) befestigt ist und vom Behälterdeckel (1) nach außen ragt, mit einer Stützrohranordnung (9), die am Ende des Adapters (3) außerhalb des Deckels (1) und in seiner axialen Verlängerung befestigt ist und ein fest mit dem äußeren Ende des Adapters (3) verbundenes Rohrstück (8) aufweist, einem ringförmigen Deckel (11), der auf das Rohrstück (8) aufgesetzt ist, Einrichtungen zum Verbinden (21, 22a, 22b) des Deckels (1) und des Rohrstücks (8) und mit wenigstens einer ringförmigen Dichtung (16), die zwischen einer Auflagefläche (14) des Instrumentenführungsrohres und einem inneren Abschnitt (31) des Deckels (11) der Stützrohranordnung (9) angeordnet ist, dadurch gekennzeichnet, daß das Rohrstück (8) und der Deckel (11) der Stützanordnung (9) jeweils eine um die Achse des Thermoelementführungsrohres (5) herum drehsymmetrische Stützfläche (33a, 34) aufweisen, so daß die Stützfläche (33a) des Deckels (11) und die Stützfläche (34) des Rohrstückes untereinander durch direkten Kontakt Metall auf Metall für eine Dichtung zu dem unter Druck stehenden Wasser des Reaktors sorgen, wenn sie aufeinander durch die Verbindungseinrichtungen (21, 22a, 22b) befestigt sind.

2. Vorrichtung nach Anspruch 1, dadurch gekennzeichnet, daß die Stützfläche (33a) des Deckels (11) die Form eines Kugelsektors und die Stützfläche des Rohrstücks (8) eine Kegelstumpfform aufweist.

3. Vorrichtung nach Anspruch 2, dadurch gekennzeichnet, daß die kugelförmige Stützfläche (33a) des Deckels (11) an einem Teil (33) des Deckels (11) ausgebildet ist, der in Bezug auf die zum Rohrstück (8) gerichtete Seite des Deckels (11) vorragt.

4. Vorrichtung nach einem der Ansprüche 2 oder 3, dadurch gekennzeichnet, daß die kegelstumpfförmige Stützfläche (34) des Rohrelements (8) einen Abschnitt einer Innenbohrung des Rohrstückes (8) bildet, der sich an dem Ende des Rohrstücks befindet, an dem der Deckel (11) aufgesetzt und befestigt ist.

5. Vorrichtung nach einem der Ansprüche 1 bis 4, dadurch gekennzeichnet, daß die Einrichtungen zur Verbindung des Deckels (11) und des Rohrstücks (8) wenigstens drei Klemmschrauben (21) und beispielsweise sechs Klemmschrauben (21) aufweisen, die im 60°-Winkel zueinander um die Achse des Thermoelementführungsrohres (5) herum angeordnet sind.

6. Dichtvorrichtung nach Anspruch 5, dadurch gekennzeichnet, daß die Einrichtungen zur Verbindung des Deckels (11) und des Rohrstücks (8) zwei Halbringe (22a, 22b) aufweisen, die nebeneinander im Inneren einer Nut (20) eingesetzt sind, die als Achse die Achse des Rohrstücks (8) hat und in der Seitenfläche des Rohrstückes ausgebildet ist, wobei jeder der Halbringe (22a) drei Öffnungen(28) mit Innengewinden für das Einsetzen von drei Klemmschrauben (21) aufweist.

7. Dichtvorrichtung nach einem der Ansprüche 1 bis o, dadurch gekennzeichnet, daß die zwischen der Auflagefläche (14) des Instrumentenführungsrohres (5) und dem inneren Abschnitt (31) des Deckels (11) angeordnete Ringdichtung (16) eine Dichtung ist, die von einer im wesentlichen kegelstumpfförmigen, verformbaren und ringförmigen Metallwandung gebildet wird, die mit ihrer kleinen Grundfläche mit der Auflagefläche des Thermoelementführungsrohres (5) und mit ihrer großen Grundfläche mit dem inneren Abschnitt (31) des Deckels (11) in Berührung kommt.

## Claims

1. A sealing device for an instrumentation column (5) passing through the cover (1) of a pressurised water nuclear reactor vessel inside an adapter (3) of tubular form fixed in an opening through the cover (1) and projecting outside the cover of the vessel (1), comprising a tubular support assembly (9) fixed on the end of the adapter (3) outside the cover (1) and in axial extension of the adapter and comprising a tubular section (8) integral with the external end of the adapter (3), a cover (11) of annular form mounted on the tubular section (8) and means (21, 22a, 22b) for assembling the cover (11) and the tubular section (8) and at least one annular seal (16) disposed between a support seat (14) of the instrumentation column and an internal part (31) of the cover (11) of the tubular support assembly (9), characterized in that the tubular section (8) and the cover (11) of the support assembly (9) each have a symmetrical seating surface (33a, 34) of revolution about the axis of the column of thermocouples (5), in such a manner that the seating surface (33a) of the cover (11) and the seating surface (34) of the tubular section ensure sealing therebetween relative to the pressurised water of the reactor through direct metal to metal contact, when they are fixed on one another by the assembling means (21, 22a, 22b).

2. A device according to claim 1, characterized in that the seating surface (33a) of the cover (11) has the form of a spherical sector and the seating surface of the tubular section (8) has a tapering form.

3. A device according to claim 2, characterized in that the spherical seating surface (33a) of the cover (11) is machined on a part (33) of the cover (11) projecting relative to the face of the cover (11) directed towards the tubular section (8).

4. A device according to either of claims 2 and 3, characterized in that the tapering seating surface (34) of the tubular element (8) forms part of an internal bore of the tubular section (8) located at the end of the tubular section on which the cover (11) is mounted and fixed.

5. A device according to any one of claims 1 to 4, characterized in that the means for assembling the cover (11) and the tubular section (8) comprise at least three clamp screws (21) and for example six clamp screws (21) disposed at 60° to one another around the axis of the column of thermocouples (5).

6. A sealing device according to claim 5, characterized in that the means for assembling the cover (11) and the tubular section (8) comprise two half rings (22a, 22b) fitted adjoining each other inside a groove (20) coaxial with the tubular section (8) and machined in the side surface of the tubular section, each of the half rings (22a) having three threaded holes (28) for engagement by three clamp screws (21).

7. A device according to any one of claims 1 to 6, characterized in that the annular seal (16) disposed between the support seat (14) of the instrumentation column (5) and the internal part (31) of the cover (11) is a seal formed by a deformable metal wall of substantially frustro-conical shape whose small base comes into contact with the support seat of the column of thermocouples (5) and whose large base comes into contact with the internal part (31) of the cover (11).
